# EUROPEAN PATENT SPECIFICATION

(11) **EP 3 323 486 B1**
(45) Date of publication and mention of the grant of the patent: **27.05.2020**
(21) Application number: 17210026.5
(22) Date of filing: 03.03.2011
(51) Int. Cl.: B01D 17/02, F02M 37/22

(54) **MOISTURE ABSORBING FILTER ASSEMBLY**
FEUCHTIGKEITSABSORBIERENDE FILTEREINRICHTUNG
ENSEMBLE DE FILTRE ABSORBANT L'HUMIDITÉ

(43) Date of publication of application: 23.05.2018
(62) Divisional of application: 11156879.6
(73) Proprietor: Puradyn Filter Technologies Inc., Boynton Beach, Florida 33426 (US)
(72) Inventor: JACOBS, Brian A., Lake Worth, Florida 33463 (US); JACOBS, William A., Lake Worth, Florida 33463 (US); SANDLER, Alan J., Boca Raton, Florida 33433 (US)
(74) Representative: Romano, Giuseppe

(56) References cited:
- WO-A1-93/22025
- DE-U1-202008 016 281
- GB-A- 2 034 192
- US-A- 5 630 855

## Description

### BACKGROUND OF THE INVENTION

### Field of the Invention

The present invention relates to a moisture absorbing filter assembly for removing aerosols and contaminants from fluids such as lubricants, fuels, and the like.

### Discussion of the Related Art

This invention relates to fluid purification devices which are preferably used in conjunction with engines using lubricating oils or hydraulic systems. More particularly, the present invention provides several unique oil / lubricant treatment configurations creating a unique system for fluid reconditioning.

Oil reclamation devices are known to incorporate an evaporator head having a heat-transmitting member mounted within a cavity. The heat-transmitting device can incorporate baffles to form a baffled evaporator chamber.

Oil filters are provided in a variety of form factors and materials. Common filters comprise a filtering medium disposed within a canister and sealed via a top member. A mechanical interface, such as a threaded interface, and fluid transfer means, such as an oil inlet and an oil outlet, are integrated into the top member. The filtering materials can be a paper product, a synthetic filtering material, and the like.

Oil reclamation devices can additionally include soluble oil additives for enriching the oil over a period of time. The additives are positioned within the filter in a section between the particle filtering material and a felt pad. The additives are placed to contact the oil and formulated to dissolve over a period of time.

Oil reclamation devices generally manage aerosols by releasing them to the atmosphere. This creates an undesirable configuration for pollution control.

Superabsorbent polymers (SAP) (also called slush powder) are polymers that can absorb and retain extremely large amounts of a liquid relative to its own mass.

Water absorbing polymers, classified as hydrogels, absorb aqueous solutions through hydrogen bonding with the water molecule. So an SAP's ability to absorb water is a factor of the ionic concentration of an aqueous solution. In de-ionized and distilled water, SAP may absorb 500 times its weight (from 30-60 times its own volume), but when put into a 0.9% saline solution, the absorbency drops to maybe 50 times its weight. The presence of valent cations in the solution will impede the polymers ability to bond with the water molecule.

Superabsorbent polymers are now commonly made from the polymerization of acrylic acid blended with sodium hydroxide in the presence of an initiator to form poly-acrylic acid, sodium salt (sometimes referred to as cross-linked sodium polyacrylate). This polymer is the most common type of SAP made in the world today. Other materials are also used to make a superabsorbent polymer, such as polyacrylamide copolymer, ethylene maleic anhydride copolymer, cross-linked carboxy-methyl-cellulose, polyvinyl alcohol copolymers, cross-linked polyethylene oxide, and starch grafted copolymer of polyacrylonitrile to name a few. The latter is one of the oldest SAP forms created.

Each one of the cited documents US 5 630 855 A, GB 2 034 192 A, DE 20 2008 016281 U1 and WO/9322025 A1 discloses a moisture separation apparatus with water absorption inserts comprising a Superabsorbent Polymer, which swells upon absorption of water and expands causing displacement of an enclosing layer in US 5 630 855 A, of neighbouring filter layers in GB 2 034 192 A, of a flat surface in DE 20 2008 016281 U1 and of slits in WO/9322025 A1.

Today superabsorbent polymers are made using one of two primary methods; suspension polymerization or solution polymerization. Both processes have their advantages over the other and both yield a consistent quality of product.

Solution based polymerization is the most common process used today for SAP manufacture. This process is efficient and generally has a lower capital cost base. The solution process uses a water based monomer solution to produce a mass of reactant polymerized gel. The polymerization's own reaction energy (exothermic) is used to drive much of the process, helping reduce manufacturing cost. The reactant polymer gel is then chopped, dried and ground to its final granule size. Any treatments to enhance performance characteristics of the SAP are usually accomplished after the final granule size is created.

The suspension process is practiced by only a few companies because it offers a higher degree of production control and product engineering during polymerization step. This process suspends the water-based reactant in a hydrocarbon-based solvent. The net result is that the suspension polymerization creates the primary polymer particle in the reactor rather than mechanically in post-reactions stages. Performance enhancements can also be during or just after the reaction stage.

The type and degree of cross-linking to the polymer control the total absorbency and swelling capacity. Low density cross-linked SAP generally has a higher absorbent capacity and swell to a larger degree. These types of SAPs also have a softer and more cohesive gel formation. High cross-link density polymers exhibit lower absorbent capacity and swell. The gel strength is firmer and can maintain particle shape even under modest pressure.

Oil reclamation processes have a general trend of extracting aerosols, such as hydrocarbons, and releasing them to the atmosphere. This process is considered as lacking consideration for the environment, and several states are currently focusing on legislation to reduce or eliminate this practice.

Thus, what is desired is a moisture absorbing filter assembly providing optimal control of the purification process. Additionally, designed is the ability for the end user to tailor the configuration for both purification and monitoring via a plurality of stacked array members.

### SUMMARY OF THE INVENTION

The present invention is directed to a moisture absorbing filter assembly according to claim 1.

The moisture absorbing filter assembly of the present invention provides an aerosol and water absorption apparatus utilizing a superabsorbent polymer (SAP) material encased within a polyester mesh forming a reclamation cartridge. The reclamation cartridge is enclosed within an expandable casing. The SAP extracts and combines with the moisture from within the fluid, then bonds to the polyester mesh.

While another aspect of the present invention provides a layer of sorbant which repels any moisture that was not previously extracted by the SAP.

With another aspect of the present invention utilizing a layer of resin disposed upstream in the process for the removal of any remaining aerosol. Additionally, the resin layer captures inbound detrimental ions and releases beneficial ions into the lubricant through a process generally understood as ion exchange.

Yet another aspect introduces various geometric configurations for the reclamation cartridge, including:
a. a folded and bonded cartridge similar to a burrito;
b. a rolled cartridge forming a spiraled core;
c. a rectangular shaped pouch;
d. a circular shaped pouch;
e. a star shaped pouch;
f. a cylindrically shaped pouch;
g. an expandable enclosure; and
h. a baffled enclosure.

The invention places the reclamation cartridge within an expanding housing.

Another aspect provides a plurality of cartridges disposed within a single housing.

In another aspect, a resin layer is disposed between a flow exit region of the cartridges and a discharge orifice of the filter.

A replaceable cartridge may be provided in the moisture absorbing filter assembly.

The present invention provides an apparatus configurable for the following:
a. removal of water only;
b. removal of water and gaseous (aerosol) contaminants; and
c. removal of water, gaseous (aerosol) contaminants, and sodium ion barriers; and
d. providing Sodium ion barriers.

The present invention can be utilized for any potentially moisture impregnated fluid, including:
a. internal combustion engine fuel,
b. oil,
c. brake fluid,
d. power steering fluid,
e. transmission fluid,
f. hydraulic fluid,
g. and the like.

The present invention can incorporate a hydrated Calcium Sodium Potassium Aluminum Silicate embedded within a polymer (ion exchange) resin bed for absorbing gases like hydrocarbons. Alternately, any of the following can be used:
a. Sodium Potassium Aluminum Silicate,
b. Hydrated Calcium Aluminum Silicate,
c. Hydrated Sodium Aluminum Silicate,
d. Hydrated Calcium Sodium Aluminum Silicate,
e. Hydrated Sodium Potassium Calcium Aluminum Silicate, and
f. Hydrated Sodium Calcium Magnesium Aluminum Silicate.

These and other features, aspects, and advantages of the invention will be further understood and appreciated by those skilled in the art by reference to the following written specification, claims and appended drawings, which follow.

### BRIEF DESCRIPTION OF THE DRAWINGS

For a fuller understanding of the nature of the present invention, reference should be made to the accompanying drawings in which:
Fig. 1 presents a sectional view of a moisture extracting apparatus which does not form part of the present invention;
Fig. 2 presents an isometric view of a first exemplary reclamation cartridge presented in a rolled form factor, abutting a resin layer, which does not form part of the present invention;
Fig. 3 presents a top view of the rolled comfiguration of the reclamation cartridge;
Fig. 4 presents an isometric view of a second exemplary reclamation cartridge presented in a pouch form factor;
Fig. 5 presents a sectional view of the pouch reclamation cartridge taken along section 5--5 of Fig. 4;

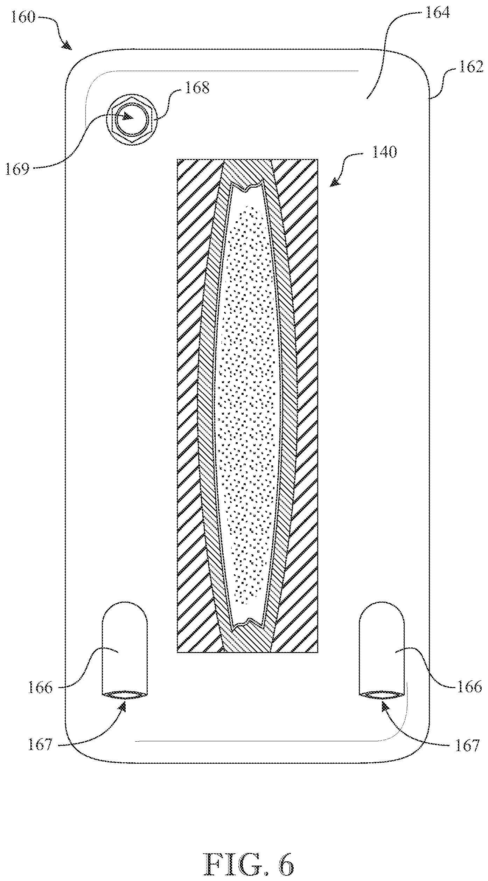

Fig. 6 presents a planar view of a third exemplary reclamation cartridge enclosing the reclamation pouch within a casing;
Fig. 7 presents a plurality of reclamation cartridges abutting a resin layer, presenting a fluid flow path;

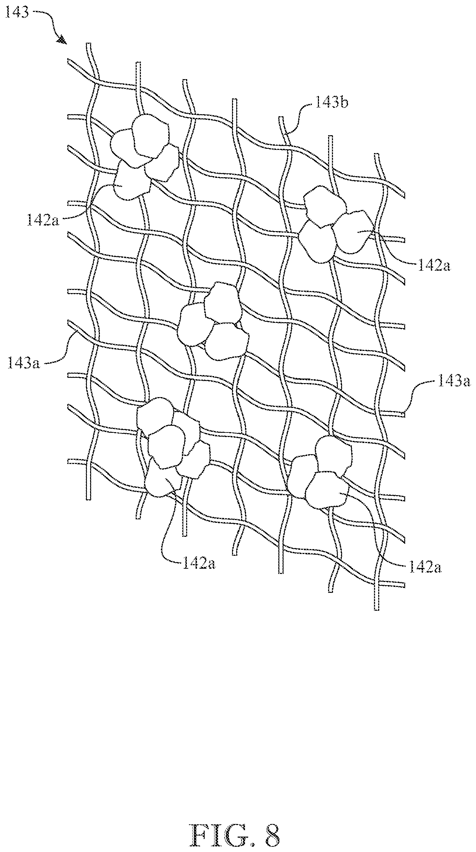

Fig. 8 presents a magnified isometric view of moisture impregnated super-absorbing particles bonded to a polyester mesh;
Fig. 9 presents an isometric sectional view of a moisture absorbing filter assembly according to the present invention incorporating an expanding reclamation cartridge;
Fig. 10 presents a partial top view of the moisture absorbing filter assembly according to the present invention;
Fig. 11 presents an elevation sectioned view of moisture absorbing filter assembly to the filter of FIG. 9, incorporating an expansion feature into a sidewall of the filter housing;
Fig. 12 presents an isometric view of a second aspect of a moisture absorbing filter assembly incorporating an alternate expanding sidewall design;
Fig. 13 presents an isometric view of a third aspect of a moisture absorbing filter assembly incorporating an external expanding moisture extraction arrangement;
Fig. 14 presents a planar, sectioned view of the moisture absorbing filter assembly taken along section 14--14 of FIG. 13;
FIG. 15 is a sectioned elevation view of an expanding casing enclosing a plurality of reclamation cartridges; and
FIG. 16 is an exemplary flow diagram presenting a moisture removal method.

Like reference numerals refer to like parts throughout the several views of the drawings.

### DETAILED DESCRIPTION OF REPRESENTATIVE EMBODIMENTS

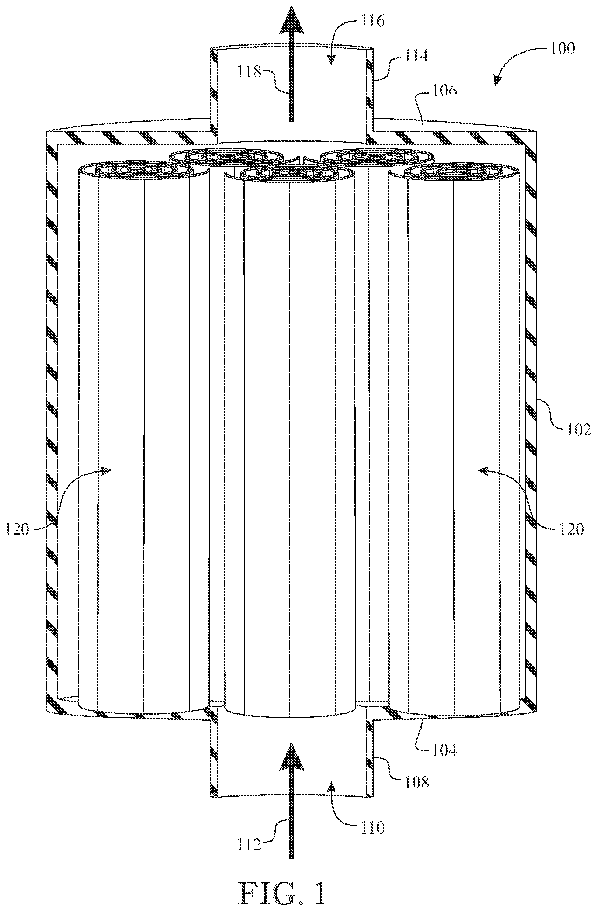

For purposes of description herein, the terms "upper", "lower", "left", "rear", "right", "front", "vertical", "horizontal", and derivatives thereof shall relate to the invention as oriented in Figure 1. However, one will understand that the invention may assume various alternative orientations and step sequences, except where expressly specified to the contrary. Therefore, the specific devices and processes illustrated in the attached drawings, and described in the following specification, are simply exemplary embodiments of the inventive concepts defined in the appended claims. Hence, specific dimensions and other physical characteristics relating to the embodiments disclosed herein are not to be considered as limiting, unless the claims expressly state otherwise.

A moisture-extracting device, generally referenced as 100, is presented in a sectioned elevation view illustrated in FIG. 1. The moisture extracting device 100 is defined as a chamber formed having a filter housing sidewall 102 formed into a tubular structure with an inlet end wall 104 disposed at a first end and an outlet end wall 106 disposed at a second end. The filter housing sidewall 102 can have any cross sectional shape, including circular, round, rectangular, a polygon, and the like. An inlet coupler 108 is disposed upon the inlet end wall 104, providing an inlet orifice 110 for receiving an inlet flow 112. The moisture-extracting device 100 is removably coupled to a supply portion of a fluid reclamation system via the inlet coupler 108. The inlet coupler 108 can be a pipe neck, a threaded interface, or any other interface known by those skilled in the art. A discharge coupler 114 is disposed upon the outlet end wall 106 providing a discharge means for the moisture-extracting device 100. The discharge coupler 114 provides a discharge orifice 116 for directing a discharge flow 118. The discharge coupler 114 is preferably a form factor consistent with the inlet coupler 108 form factor. A fluid, such as a fuel, a lubricant, and the like, flows into an interior chamber via the inlet flow 112, into the interior of the filter housing sidewall 102 wherein moisture is extracted via a plurality of water absorption inserts 120 disposed therein, and exits via the discharge flow 118. The overall flow path is illustrated as a medium flow path 230.

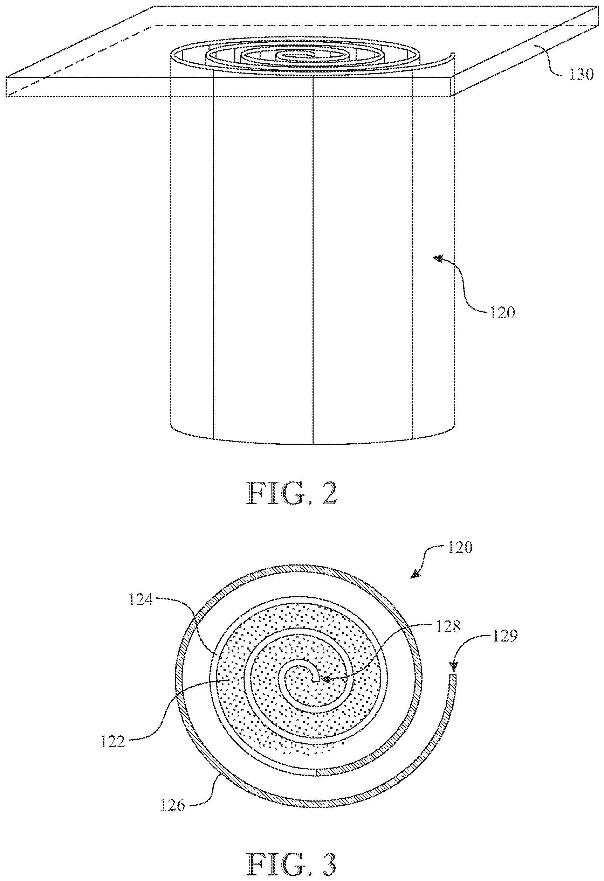

The water absorption insert 120 is a first exemplary embodiment presented in detail in FIGS. 2 and 3. The water absorption insert 120 is formed via rolling Superabsorbant Polymer (SAP) 122 within a sheet of polyester mesh 124, starting at a core center 128 and continuing to a wrap edge 129. A polypropylene sorbant 126 is grafted onto an outer edge of the polyester mesh 124 and continues to be wrapped about the core. A resin layer 130 can be disposed about a discharging end of the water absorption insert 120 for additional purification processing. The Superabsorbant Polymer (SAP) 122 is described in the background section of the specification. The fluid enters an entry end of the water absorption insert 120 exposing the fluid to the Superabsorbant Polymer (SAP) 122. The Superabsorbant Polymer (SAP) 122 extracts and absorbs any moisture from the fluid. The absorption process causes the Superabsorbant Polymer (SAP) 122 to expand to a volume that is potentially up to 500 times the original volume. The spiral design allows the water absorption insert 120 to expand in accordance with the absorption of the moisture by the Superabsorbant Polymer (SAP) 122. The resin layer 130 abutting the fluid discharging end of the water absorption insert 120 then entraps any excess or escaping moisture. The fluid can additionally be processed via a polypropylene sorbant 126, wherein the polypropylene sorbant 126 repels any excess water and gel, allowing the lubricating fluid to flow through. This increases the opportunity for the Superabsorbant Polymer (SAP) 122 to extract the moisture.

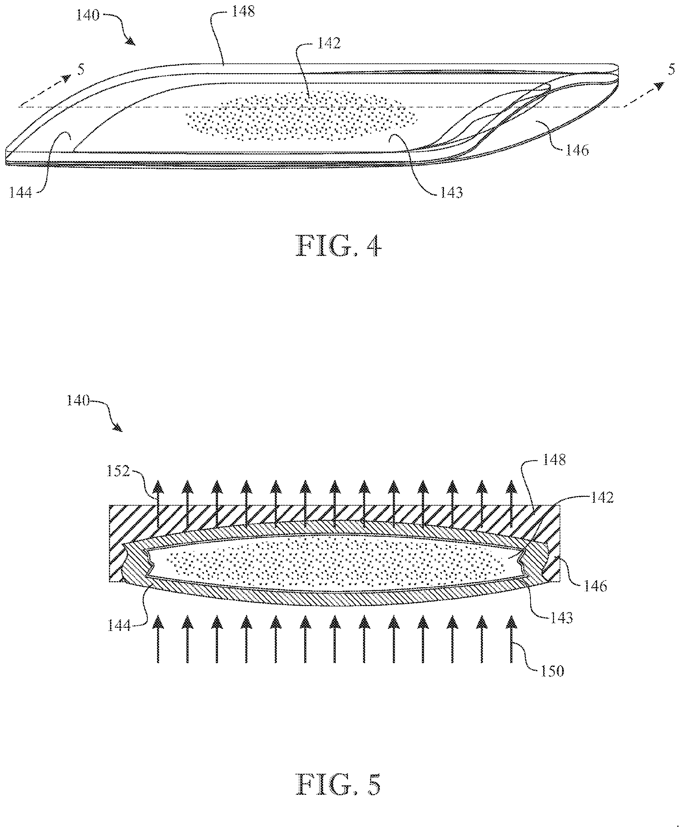

An alternate form factor is presented as a moisture absorbent cartridge 140 illustrated in FIG. 4, with a sectional side view presented in FIG. 5. The moisture absorbent cartridge 140 includes the same materials of the water absorption insert 120, encasing a Superabsorbant Polymer (SAP) 142 within a polyester mesh 143. The polyester mesh 143 is enclosed within a polypropylene sorbant 144. An expandable sidewall 146 is disposed upon a discharging side of the polypropylene sorbant 144, as illustrated. The moisture absorbent cartridge 140 would be arranged within the fluid flow providing an inlet flow 150 into an entry side and an outlet flow 152 projecting from a discharge side of the moisture absorbent cartridge 140. Moisture would be extracted by the Superabsorbant Polymer (SAP) 142, increasing the volume of the Superabsorbant Polymer (SAP) 142 particles. The moisture impregnated Superabsorbant Polymer (SAP) 142 bonds to the polyester mesh 143, allowing reclaimed fluid to pass through the polyester mesh 143 via the outlet flow 152. The geometry of the moisture absorbent cartridge 140 is such, providing a means for expansion. One such means would be an expandable sidewall 146. Another is via utilizing a flexible material allowing the upper and lower surfaces to expand as illustrated. Any residual moisture is repelled via the polypropylene sorbant 144. Additional reclamation is provided via a resin layer 148, the resin layer 148 absorbs any aerosols, such as hydrocarbons. Additionally, the resin layer 148 releases ions into the fluid. An exemplary use of the resin layer provides an ion exchange barrier to exchange, for example, sodium ions for another beneficial ion.

The resin layer 148 can provide two (2) distinct purposes via three (3) different methods. The first purpose is to remove and capture aerosols contaminating the subject fluid. The aerosols requiring removal are generally between 1/10^{th} micron - 3/10^{ths} micron in size. This is accomplished via a first method, utilizing natural minerals such as those in the zeolite group, or perlite a volcanic glass converted to a form with millions of microstructures, which can contain aerosols via a superheating process. The microchannels in Zeolite and expanded Perlite are typically 1/10^{th} to 1 micron with sharp edges to strain or shear the aerosols from the fluid.

The second purpose is to release beneficial ions into the subject fluid. This can be accomplished in any of at least three distinct methods. A first method is an extension of the aerosol removal method described above. The material used for extracting aerosol can also be used for an ionic exchange process. Inbound Sodium ions are captured, in exchange for a beneficial ion, which is released into the subject fluid. The process can be tailored by the selection of the specific mineral or volcanic mixture utilized.

A second method is provided by a selection of a synthetic polymer resin. Without this polymer we would otherwise need some kind of a binder for the minerals in the zeolite family or for the expanded perlite, The synthetic polymer resin provides the same ion exchange method as described above, utilizing different beneficial ions.

A third method utilized embedded zeolite, perlite, or a combination therein, embedded within the resin bed. This combination provides benefits found in each of the previously described methods.

The reclamation cartridges can be packaged into a variety of form factors. A first exemplary packaging places the inlet end wall 104 into an expanding absorbent pouch 160. The expanding absorbent pouch 160 comprises pouch body 162 having a pouch interior 164 with at least one inlet connector 166 and at least one outlet connector 168. The inlet connector 166 provides an inlet port 167 in fluid communication with the interior for entry of the subject fluid. The outlet connector 168 provides an outlet port 169 in fluid communication with the interior for discharge of the subject fluid. The interior can be defined as a shell having an upper surface, a lower surface and a perimeter surface disposed there between. The design can provide at least one inlet port 167 having a total cross sectional area that is larger than the at least one outlet port 169 total cross sectional area, creating a positive internal pressure. The fluid holding container can be in a rectangular form factor (as shown), a circular form factor, a bladder that comprises a plurality of expanding sections, an accordion shaped bladder, and the like.

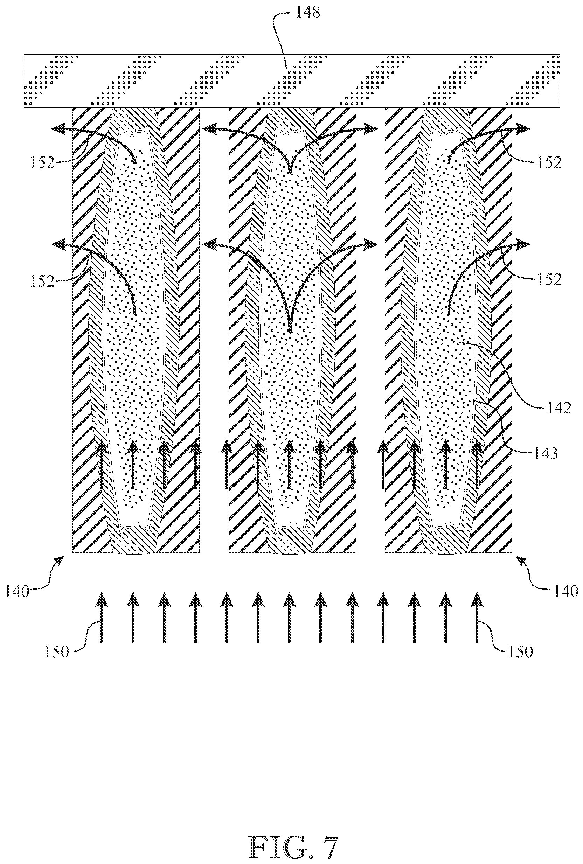

A plurality of moisture absorbent cartridges 140 can be disposed within a single container providing a directed flow as presented in FIG. 7. An inlet flow 150 enters the plurality of moisture absorbent cartridges 140, flowing towards a resin layer 148. The resin layer 148 limits the fluid flow, creating a pressure within the moisture absorbent cartridges 140. The fluid is then deflected, providing an outlet flow 152 that is generally perpendicular to the direction of the inlet flow 150. The increased pressure assists the Superabsorbant Polymer (SAP) 142 in the absorption process as well as the process of bonding the Superabsorbant Polymer (SAP) 142 to the polyester mesh 143.

One of the key inventions in the reclamation process is the utilization of the polyester mesh 143 for bonding and containing the Superabsorbant Polymer (SAP) 142. The polyester mesh 143 is fabricated in any method; with an exemplary embodiment being a woven mesh as illustrated. The woven mesh is formed via weaving a plurality of first oriented polyester mesh fibers 143a with a plurality of second oriented polyester mesh fibers 143b. Moisture is absorbed by the Superabsorbant Polymer (SAP) 142 generating a moisture set SAP 142a. The moisture set SAP 142a bonds to the polyester mesh 143 as illustrated; whereas heat as in engine oil operating temperatures may be used to accelerate the reaction. As the Superabsorbant Polymer (SAP) 142 absorbs the moisture, the Superabsorbant Polymer (SAP) 142 expands. The moisture absorbent cartridge 140 is placed within an enclosure; the enclosure is designed to expand to accommodate the increase in volume. The expansion design can be of any reasonable form factor.

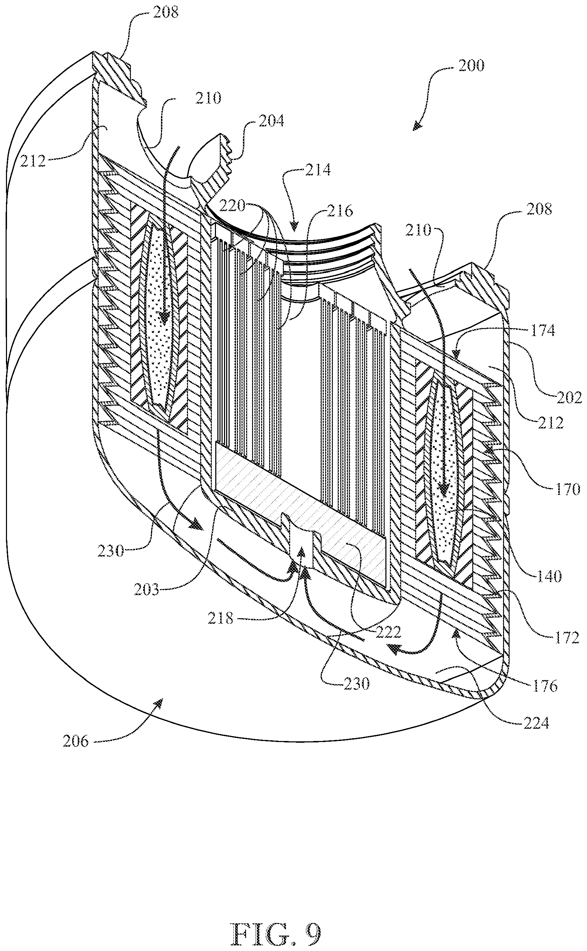

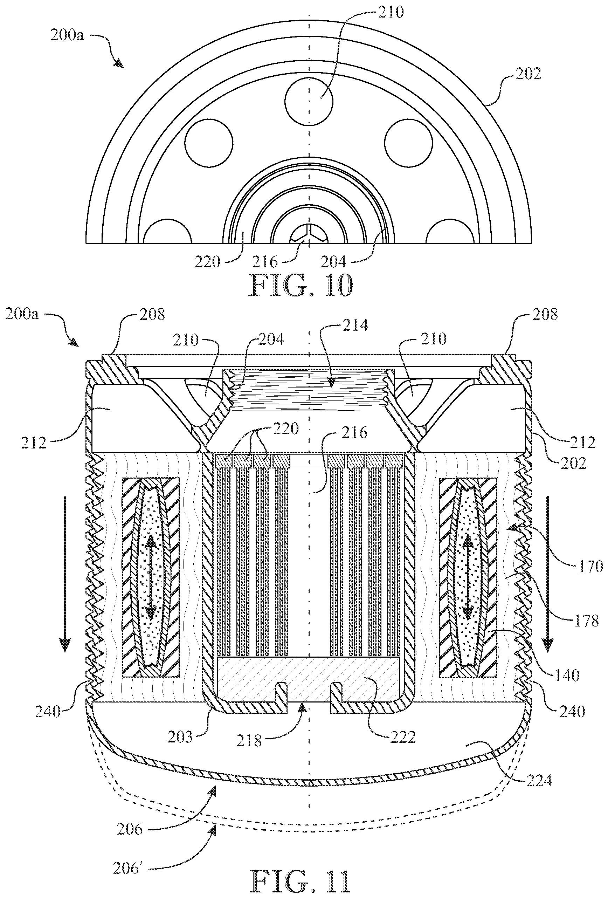

According to the present invention, the moisture absorbent cartridge 140 can be integrated into moisture absorbing filter assembly 200. It is recognized that the integration can be provided in any reasonable configuration, with a first exemplary embodiment illustrated in FIGS. 9-11. The moisture absorbing filter assembly 200 incorporates the commonly known filtration elements, including a filter canister 202 being removably secured to a filter mount (not shown) via a filter mounting interface 204. One commonly used mounting is a threaded interface. The end of the moisture absorbing filter assembly 200 opposing the filter mounting interface 204 is referenced as a filter bottom 206. A mounting seal 208 is provided extending from an upper surface of the filter canister 202 being located proximate an outer circumference of the filter canister 202. The mounting seal 208 provides a fluid seal between the moisture absorbing filter assembly 200 and the filter mount. A plurality of inlet ports 210 is formed in the upper surface providing a means for passing fluid from the system (not shown), into the moisture absorbing filter assembly 200. The inbound fluid is distributed via an inlet manifold 212, entering an expanding absorbent container 170 within the moisture absorbing filter assembly 200. The moisture absorbing filter assembly 200 incorporates a canister interior wall member 203 separating a moisture absorption section and a filtration section. At least one interior wall port 218, located in the lower portion of the canister interior wall member 203, provides a transition between the moisture absorption section and a filtration section of the moisture absorbing filter assembly 200. A plurality of moisture absorbent cartridges 140 are encased within a porous and pliant material 178 within an expanding exterior wall 172 of the expanding absorbent container 170, wherein the porous and pliant material 178 is a material that allows for passage of fluid therethrough. The fluid flows into the expanding absorbent container 170 via a first expanding end 174, continuing into the plurality of moisture absorbent cartridges 140. The moisture absorbent cartridge 140 absorbs the moisture from the fluid as previously described. As the moisture is absorbed, the SAP 122 increases in volume, and the expanding exterior wall 172 expands longitudinally to accommodate the increase in stored volume reconfiguring the filter bottom 206 from an originally manufactured configuration illustrated as a solid line to an extended configuration 206' illustrated as a broken line. Once fluid is processed, it is discharged through a second expanding end 176 of the expanding absorbent container 170, passing into an expansion region 224. The fluid continues, flowing through the interior wall port 218, transitioning from a moisture removal process to an aerosol removal and filtration process. A resin layer 222 is provided proximate the transition for removal of aerosols from the fluid. The fluid continues into a filtration chamber comprising filter membranes 220. An exit conduit 216 can be provided for discharging the fluid through the exit port 214. The exit conduit 216 can be hollow or filled with a filtration means.

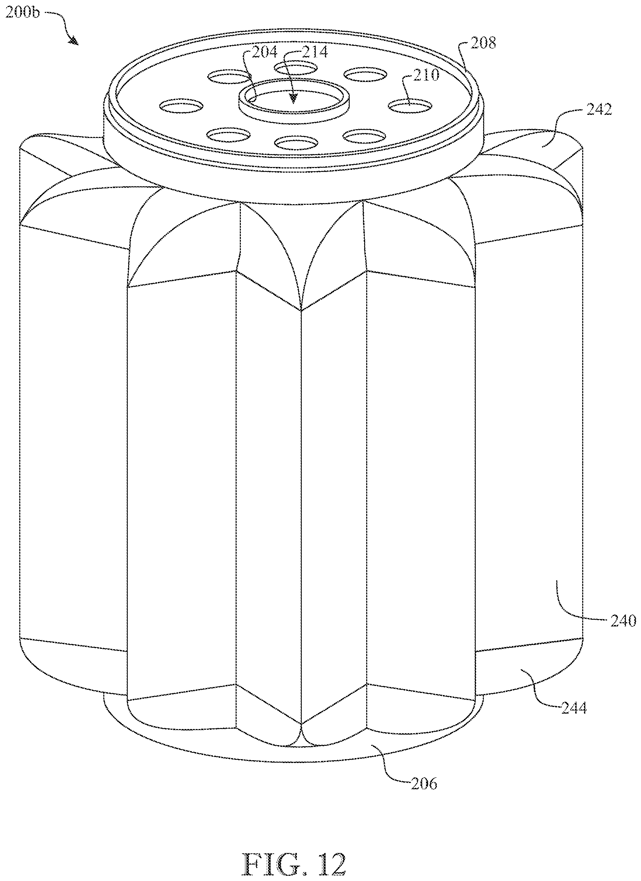

A third exemplary embodiment illustrated in FIG. 12 and referred to as moisture absorbing filter assembly 200b. In the third embodiment, the expansion is also integrated into the filter canister 202 via a canister expansion section 240. An expansion adaptation upper member 242 and a expansion adaptation lower member 244 are disposed, providing a transition between the canister expansion section 240 and the filter canister 202. The canister expansion section 240 expands circumferentially to accommodate the increase in volume of the Superabsorbant Polymer (SAP) 122. It is recognized the expansion design can be left to the designer.

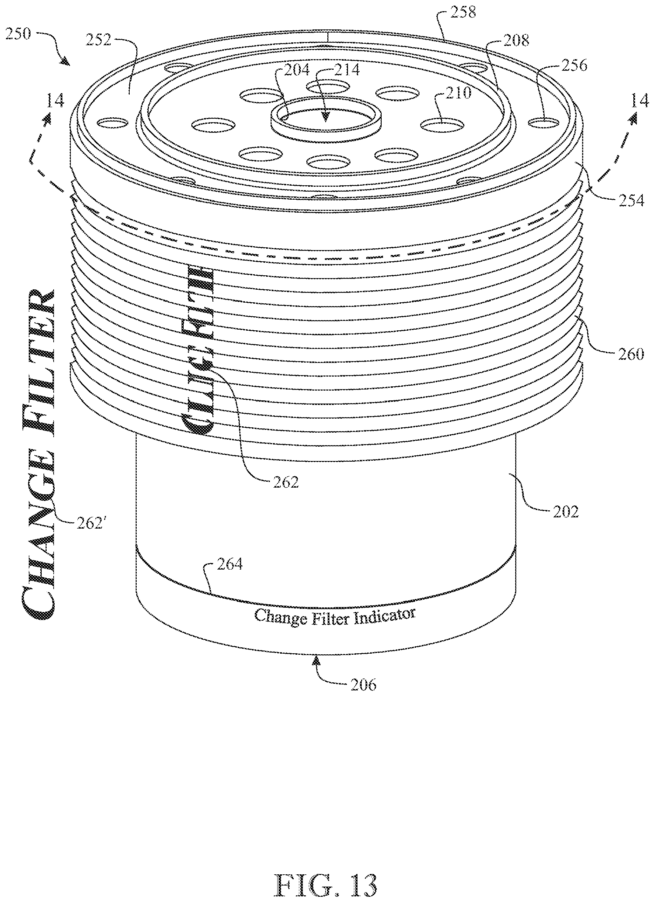

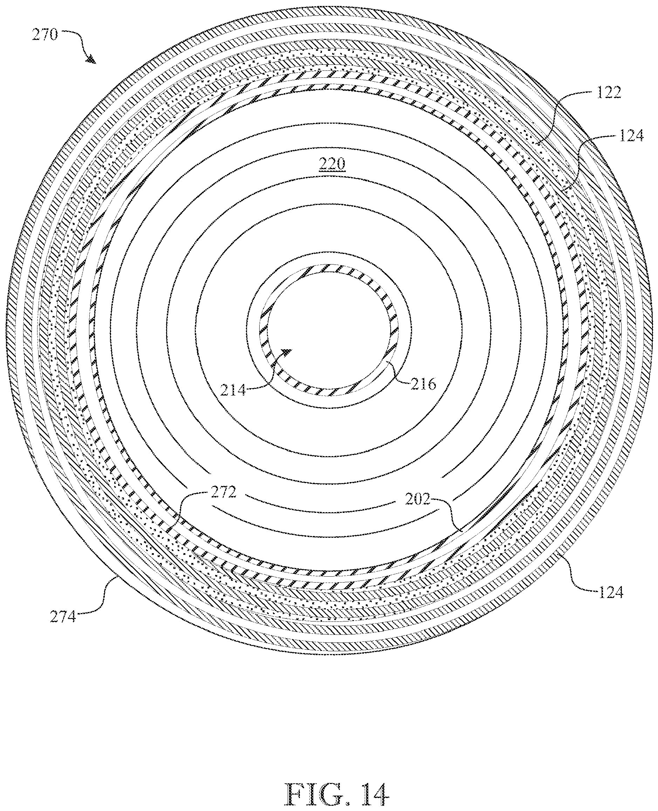

An alternate configuration is illustrated in FIG. 13 and referred to as a dual reclamation processing apparatus 250, with a cross sectional view detailing the moisture absorption process in FIG 14. The dual reclamation processing apparatus 250 provides two independent reclamation sections. The dual reclamation processing apparatus 250 comprises a common filtration section having the common filtration components previously described herein and a separate moisture absorption section having its own separate flow path. The exemplary moisture absorption section is provided being external to the filter canister 202 of the filtration section. The moisture absorption section is defined via a moisture absorption sidewall 254 having a plurality of fluid ports 256 disposed through a moisture absorption upper seal 252 and a moisture removal section interface seal 258 formed about a perimeter of the moisture absorption sidewall 254 providing a fluid containment seal between the fluid sources and the chamber. An expansion sidewall section 260 is formed along at least a portion of a sidewall of the moisture absorption sidewall 254. The expansion sidewall section 260 allows the sidewall to expand longitudinally as the volume of the Superabsorbant Polymer (SAP) 122 increases. The dual reclamation processing apparatus 250 can include any of a variety of indicators noting when the moisture absorption section requires replacement. One such indicator is a printed indicator 262, which is illegible when the expansion sidewall section 260 is collapsed and legible (printed replacement indicator 262') when expanded. A second such indicator is applied to a respective location on the filter canister 202, whereby the expansion sidewall section 260 expands eventually aligning the bottom of the moisture absorption sidewall 254 to the filter replacement indicator line 264. A spiraling roll of polyester mesh 124 is formed about a container interior 272, containing deposits of Superabsorbant Polymer (SAP) 122 between the initial rolled layers of the polyester mesh 124. The Superabsorbant Polymer (SAP) 122 can be rolled within the internal layers, allowing for expansion outward along the spiraling layers. The roll of layers can be contained within a container exterior body 274. The container exterior body 274 can be pleated allowing for radial expansion. A polypropylene sorbant 126 can be grafted to the last wrap or several wrapped layers of the polyester mesh 124, as previously described.

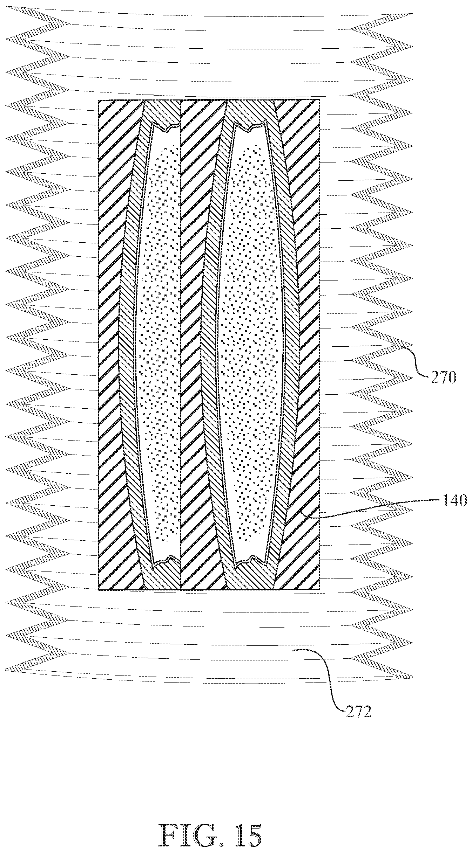

The moisture absorption can be confined within any expansion enclosure. The expansion can be longitudinally as illustrated in the exemplary embodiment presented in FIG. 15, circumferentially, radially, or any combination therein. The expansion can be accomplished by any known expanding surface 270 such as a pleated surface, a stretchable surface, and the like. The exemplary embodiment presents a longitudinally expanding surface via a pleating. A plurality of moisture absorbent cartridges 140 can be disposed within a container interior 272 of the expanding surface 270. The expanding surface 270 can provide a fluid entrapping enclosure with an inlet and an outlet (not shown, but well understood). Alternately, the expanding surface 270 can be of a sealed, porous material allowing the contaminated fluid to flow through the containing material.

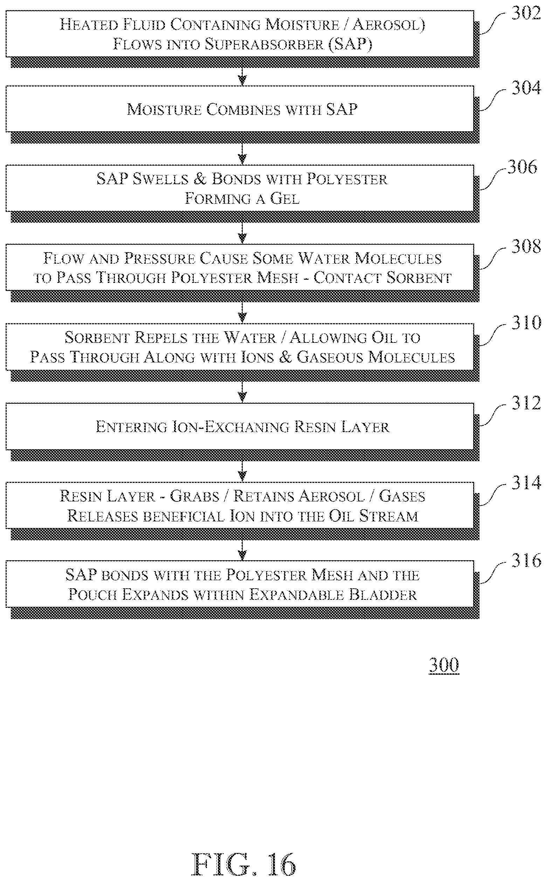

The present invention is provided via a uniquely defined series of processing steps, the steps presented in a reclamation flow diagram 300 of FIG. 16. The process initiates flowing heated fluid (such as oil or other lubricants) that is contaminated with moisture and / or aerosol into a moisture extracting apparatus comprising a superabsorbent polymer 122, in accordance with an expose fluid to the superabsorbent polymer step 302. Entrapped moisture is extracted and absorbs with the superabsorbent polymer 122, in accordance with a moisture absorption step 304. As the SAP absorbs the moisture, the SAP swells. The SAP and combined moisture molecules then bond with the polyester mesh forming a gel. This is referenced as a SAP swelling and bonding step 306. During instances where any moisture fails to be absorbed by the SAP, the moisture contacts a polypropylene sorbant layer 126 in accordance with a moisture flow through control step 308. The polypropylene sorbant layer 126 repels the moisture allowing the SAP additional opportunity to absorb the previously missed moisture. The lubricant continues to flow through the polypropylene sorbant layer 126 into a resin bed, as referred to in a sorbant layer-repelling step 310. The subject lubricant continues, entering an ion-exchanging resin layer 130, in accordance with an exposure to a resin layer step 312. The resin layer 130 extracts, contains and retains aerosols or gases that were previously entrapped within the lubricant. Additionally, the resin layer 130 introduces beneficial ions into the lubricant. These actions are referred to as a resin bed activation step 314. In parallel with the reclamation processes described herein, the SAP is encased within a polyester mesh 124 formed into a bladder. As the moisture continues to be absorbed by the SAP, the SAP expands upward to 500 times the original volume. The SAP bonds with the polyester mesh 124 forming a gel. The bladder expands in conjunction with the increase in volume of the SAP. This is referred to as a SAP pouch absorption and containment via bonding and expansion step 316.

It is understood that the method described herein can be accomplished passing the lubricant through the steps prior to a filtration process, following a filtration step, or a partial amount of the lubricant passing through the moisture removal process in parallel to a filtration process. The process can be used for fluids such as gas, lubricants (such as oil, power steering fluid, transmission fluid, and the like), among others. The use of the resin layer 130 is optional.

The above description is considered that of the preferred embodiments only. Modifications of the invention within the scope of the claims will occur to those skilled in the art and to those who make or use the invention.

## Claims

1. A moisture absorbing filter assembly (200) comprising:
• a filter canister (202) being removably secured to a filter mount via a filter mounting interface (204),
• a filter bottom (206) opposing the filter mounting interface (204),
• a mounting seal (208) extending from an upper surface of the filter canister (202) and being located proximate an outer circumference of the filter canister (202),
• a plurality of inlet ports (210) formed in the upper surface providing means far passing a fluid into the moisture absorbing filter assembly (200),
• a canister interior wall member (203) separating a moisture absorption section and a filtration section and at least one interior wall port (218), located in the lower portion of the canister interior wall member (203) providing a transition between the moisture absorption section to an aerosol removal section and a filtration section; the aerosol removal section comprising a resin layer (222) proximate the transition and the filtration section comprising filter membranes (220),
• an expanding absorbent container (170) having an expanding exterior wall (172), a first expanding end (174) and a second expanding end (176) and a plurality of moisture absorbent cartridges (140) encased within a porous and pliant filtering material (178) within the expanding exterior wall (172),
wherein each moisture absorbent cartridge (140) is expandable and encases a Superabsorbant Polymer (SAP) (142) within a polyester mesh (143) and a polypropylene sorbent (144) disposed at least partially about an exterior of the polyester mesh (143), and wherein the fluid flows into the expanding absorbent container (170) via the first expanding end (174), continues into the plurality of moisture absorbent cartridges (140), the moisture absorbent cartridges (140) absorbing the moisture from the fluid, the SAP (122) increasing in volume, and the expanding exterior wall (172) expanding longitudinally to accommodate the increase in stored volume, the processed fluid is discharged through the second expanding end (176) of the expanding absorbent container (170), passes into an expansion region (224) and then flows through the interior wall port (218), transitioning from the moisture removal section to the aerosol removal section and filtration section and is then discharged into an exit conduit (216) and through an exit port (214).

2. A moisture absorbing filter assembly (200) according to claim 1, wherein the expansion of the moisture absorbent cartridge (140) is provided in at least one of:
a) longitudinally,
b) circumferentially, and/or
c) radially.

3. A moisture absorbing filter assembly (200) according to one of claims 1 or 2 wherein the resin layer (222) includes at least one of:
a) Zeolite,
b) Expanded perlite,
e) Calcium Sodium Potassium Aluminum Silicate,
d) Sodium Potassium Aluminum Silicate,
e) Hydrated Calcium Aluminum Silicate,
f) Hydrated Sodium Aluminum Silicate,
g) Hydrated Calcium Sodium Aluminum Silicate,
h) Hydrated Sodium Potassium Calcium Aluminum Silicate, and/or
i) Hydrated Sodium Calcium Magnesium Aluminum Silicate.

4. A moisture absorbing filter assembly (200) according to any of the claims 1 to 3, wherein the filter canister (202) comprises a canister sidewall comprising at least one expansion feature (240), whereby when the expansion feature (240) expands, the filter bottom (206) is reconfigured into an extended configuration (206').

5. A moisture absorbing filter assembly (200) according to claims 1 or 2, wherein the moisture absorbent cartridge (140) is in at least one of the following form factors:
a) rolled,
b) a folded and bonded cartridge similar to a burrito,
c) a rolled cartridge forming a spiraled core,
d) a circular shaped pouch;
e) a star shaped pouch;
f) a cylindrically shaped pouch, and/or
g) a rectangular shaped pouch.

## Patentansprüche

1. Eine feuchtigkeitsabsorbierende Filteranordnung (200), bestehend aus:
• einen Filterbehälter (202), der über eine Filterbefestigungsschnittstelle (204) abnehmbar an einer Filterhalterung befestigt ist,
• einen Filterboden (206), welcher der Filterbefestigungsschnittstelle (204) gegenüberliegt,
• eine Montagedichtung (208), die sich von einer oberen Fläche des Filterbehälters (202) erstreckt und in der Nähe eines Außenumfangs des Filterbehälters (202) angeordnet ist,
• eine Vielzahl von Einlassöffnungen (210), die in der oberen Fläche ausgebildet sind und Mittel bereitstellen, um eine Flüssigkeit weit in die feuchtigkeitsabsorbierende Filteranordnung (200) zu leiten,
• ein Kanister-Innenwandelement (203), das einen Feuchtigkeitsabsorptionsabschnitt und einen Filtrationsabschnitt trennt, und mindestens eine Innenwandöffnung (218), die sich im unteren Abschnitt des Kanister-Innenwandelements (203) befindet und einen Übergang zwischen dem Feuchtigkeitsabsorptionsabschnitt zu einem Aerosol-Entfernungsabschnitt und einem Filtrationsabschnitt bereitstellt; wobei der Aerosol-Entfernungsabschnitt eine Harzschicht (222) in der Nähe des Übergangs umfasst und der Filtrationsabschnitt Filtermembranen (220) umfasst,
• einen sich ausdehnenden absorbierenden Behälter (170) mit einer sich ausdehnenden Außenwand (172), einem ersten sich ausdehnenden Ende (174) und einem zweiten sich ausdehnenden Ende (176) und einer Vielzahl von feuchtigkeitsabsorbierenden Patronen (140), die innerhalb der sich ausdehnenden Außenwand (172) in einem porösen und nachgiebigen Filtermaterial (178) eingeschlossen sind,wobei jede feuchtigkeitsabsorbierende Patrone (140) expandierbar ist und ein superabsorbierendes Polymer (SAP) (142) innerhalb eines Polyesternetzes (143) und ein Polypropylen-Sorptionsmittel (144), das zumindest teilweise um eine Außenseite des Polyesternetzes (143) herum angeordnet ist, umhüllt, und wobei das Fluid über das erste expandierende Ende (174) in den expandierenden absorbierenden Behälter (170) fließt, sich in die Vielzahl von feuchtigkeitsabsorbierenden Patronen (140) fortsetzt, wobei die feuchtigkeitsabsorbierenden Patronen (140) die Feuchtigkeit aus der Flüssigkeit absorbieren, das Volumen des SAP (122) zunimmt und die sich ausdehnende Außenwand (172) sich in Längsrichtung ausdehnt, um die Zunahme des gespeicherten Volumens aufzunehmen, das die verarbeitete Fluessigkeit durch das zweite sich ausdehnende Ende (176) des sich ausdehnenden Absorptionsmittelbehaelters (170) abgegeben wird, in einen Ausdehnungsbereich (224) gelangt und dann durch die innere Wandöffnung (218) fliesst, wobei es von dem Feuchtigkeitsentfernungsabschnitt zu dem Aerosolentfernungsabschnitt und dem Filtrationsabschnitt übergeht, und dann in eine Ausgangsleitung (216) und durch eine Ausgangsöffnung (214) abgegeben wird.

2. Feuchtigkeitsabsorbierende Filteranordnung (200) nach Anspruch 1, bei der die Ausdehnung der feuchtigkeitsabsorbierenden Patrone (140) in mindestens einem von beiden vorgesehen ist:
a) in Längsrichtung,
b) umlaufend, und/oder
c) radial.

3. Feuchtigkeitsabsorbierende Filteranordnung (200) nach einem der Ansprüche 1 oder 2, wobei die Harzschicht (222) mindestens eines der folgenden Merkmale aufweist:
a) Zeolith,
b) Expandiertes Perlit,
e) Calcium-Natrium-Kalium-Aluminium-Silikat,
d) Natrium-Kalium-Aluminium-Silikat,
e) Hydratisiertes Calcium-Aluminium-Silikat,
f) Hydratisiertes Natrium-Aluminium-Silikat,
g) Hydratisiertes Calcium-Natrium-Aluminium-Silikat,
h) Hydratisiertes Natrium-Kalium-Kalzium-Aluminium-Silikat, und/oder
i) Hydratisiertes Natrium-Kalzium-Magnesium-Aluminium-Silikat.

4. Feuchtigkeitsabsorbierende Filteranordnung (200) nach einem der Ansprüche 1 bis 3, wobei der Filterbehälter (202) eine Behälterseitenwand mit mindestens einem Ausdehnungsmerkmal (240) aufweist, wodurch, wenn sich das Ausdehnungsmerkmal (240) ausdehnt, der Filterboden (206) in eine ausgedehnte Konfiguration (206') umkonfiguriert wird.

5. Feuchtigkeitsabsorbierende Filteranordnung (200) nach Anspruch 1 oder 2, wobei die feuchtigkeitsabsorbierende Patrone (140) in mindestens einem der folgenden Formfaktoren vorliegt:
a) gerollt,
b) eine gefaltete und gebundene Patrone ähnlich einem Weizenfladen,
c) eine gerollte Patrone, die einen spiralförmigen Kern bildet,
d) ein kreisförmiger Beutel;
e) ein sternförmiger Beutel;
f) einem zylindrisch geformten Beutel, und/oder
g) einen rechteckigen Beutel.

## Revendications

1. L'ensemble de filtre d'absorption d'humidité (200) comprenant:
• la cartouche de filtre (202) étant fixée de manière amovible à un support de filtre de montage par l'intermédiaire d'une interface de montage du filtre (204),
• le fond de filtre (206) qui s'oppose à l'interface de montage de filtre (204),
• l'étanchéité de montage (208) qui s'étend depuis une surface supérieure de la cartouche du filtre (202) et il est situé à proximité d'une circonférence externe de la cartouche du filtre (202),
• la pluralité d'orifices d'entrée (210) qui est formé dans la surface supérieure fournissant des moyens pour faire passer du fluide dans l'humidité afin d'absorber l'ensemble de filtre (200),
• l'élément de la paroi interne de la cartouche (203) qui sépare une section d'absorption d'humidité et une section de filtration et au moins un orifice de paroi interne (218), qui est situé dans la partie inférieure de l'élément de paroi interne de la cartouche (203) qui fournit une transition entre la section d'absorption d'humidité à une section d'élimination des aérosols et une section de filtration; la section d'élimination des aérosols comprenant une couche de résine (222) qui est à proximité de la transition et de la section de filtration et comprend des membranes du filtre (220),
• le récipient absorbant en expansion (170) avec un mur extérieur en expansion (172), une première fin en expansion (174) et une deuxième extrémité en expansion (176) et une pluralité de cartouches absorbant l'humidité (140) qui sont enfermés dans un matériau filtrant poreux et souple (178) dans le mur externe en expansion (172),
dans lequel chaque cartouche absorbant l'humidité (140) est extensible et elle renferme un polymère super absorbant (SAP) (142) en une maille de polyester (143) et l'absorbant en polypropylène (144) qui est disposé au moins partiellement autour d'une partie externe de la maille de polyester (143), et dans lequel le fluide s'écoule dans le récipient absorbant en expansion (170) par l'intermédiaire de la première extrémité en expansion (174), qui continue dans la pluralité de cartouches absorbant l'humidité (140), les cartouches absorbant l'humidité (140) et il absorbe l'humidité du fluide, le SAP (122) qui augmente en volume, et la paroi externe en expansion (172) qui se dilate longitudinalement pour s'adapter à l'augmentation du volume stocké, le fluide traité est ensuite évacué par la seconde extrémité en expansion (176) du récipient absorbant en expansion (170), qui passe dans une région d'expansion (224) puis il coule à travers le port de paroi interne (218), après avoir obtenu la transition de la section d'élimination de l'humidité à la section d'élimination des aérosols et à la section de filtration, puis elle est déchargée au conduit de sortie (216) et à travers l'orifice de sortie (214).

2. L'ensemble du filtre absorbant l'humidité (200) conformément à la revendication 1, dans laquelle l'expansion de la cartouche absorbant l'humidité (140) est prévue comme:
a) longitudinalement,
b) circonférentiellement, et/ou
c) radialement.

3. L'ensemble du filtre absorbant l'humidité (200) conformément à l'une des revendications 1 ou 2 dans laquelle la couche de résine (222) comprend au moins l'un des:
a) Zéolite,
b) Perlite expansée,
e) Silicate d'Aluminum de Potassium de Sodium de Calcium,
d) Silicate d'Aluminum de Potassium de Sodium,
e) Silicate de Calcium et d'Aluminium Hydraté,
f) Silicate d'Aluminum et de Sodium Hydraté,
g) Silicate d'Aluminum de Sodium et de Calcium Hydraté,
h) Silicate de Aluminum de Calcium de Potassium de Sodium Hydraté
i) Silicate d'Aluminum de Magnésium de Calcium de Sodium Hydraté.

4. L'ensemble du filtre absorbant l'humidité (200) conformément à l'une quelconque des revendications 1 à 3, dans lequel la cartouche du filtre (202) qui comprend une paroi latérale de bidon comprenant au moins une caractéristique d'expansion (240), grâce à quoi la caractéristique d'extension (240) se développe, le fond du filtre (206) est reconfiguré en la configuration étendue (206').

5. L'ensemble du filtre absorbant l'humidité (200) conformément à l'une des revendications 1 ou 2, dans lequel la cartouche absorbant l'humidité (140) est dans au moins l'un des facteurs de forme suivants:
a) roulée,
b) cartouche pliée et collée similaire à un burrito,
c) cartouche roulée formant un noyau spiralé,
d) pochette en forme circulaire;
e) pochette en forme d'étoile;
f) poche de forme cylindrique, et/ou
g) poche en forme rectangulaire.
